# EUROPÄISCHE PATENTSCHRIFT

(11) **EP 1 403 550 B1**
(45) Veröffentlichungstag und Bekanntmachung des Hinweises auf die Patenterteilung: **22.03.2006**
(21) Anmeldenummer: 03021282.3
(22) Anmeldetag: 19.09.2003
(51) Int. Cl.: F16F 9/05, B60G 15/12

(54) **Schwingungsdämpfer**
Shock absorber
Amortisseur de vibrations

(30) Priorität: 26.09.2002 DE 10244858
(43) Veröffentlichungstag der Anmeldung: 31.03.2004
(73) Patentinhaber: ZF Sachs AG, 53783 Eitorf (DE)
(72) Erfinder: Klitsch, Bernd, 74360 Ilsfeld (DE); Brehm, Stefan, 53773 Hennef (DE); Müller, Michael, 53773 Hennef (DE)

(56) Entgegenhaltungen:
- DE-A- 19 645 228
- US-A- 6 116 584

## Beschreibung

Die Erfindung betrifft einen Schwingungsdämpfer, bestehend aus einem Dämpfungselement und einer Luftfeder, wobei das Dämpfungselement ein Behälterrohr, ein Befestigungsteil und eine Kolbenstange aufweist und die Luftfeder aus einem als Rollbalg wirkenden Federbalg, einem mit einer schwingungsarm zu haltenden Masse verbundenen Außenrohr und einem ein Abrollprofil tragenden Abrollrohr besteht, wobei der Federbalg einen mit einer unter Druck stehenden Gasfüllung versehenen Federraum begrenzt, während das Abrollrohr den Gasraum gegenüber dem Behälterrohr abdichtet und auf diesem fixiert ist.

Schwingungsdämpfer der vorgenannten Art werden beispielsweise an einer Aufhängung eines Fahrwerkes eines Nutzkraftfahrzeugs angewendet, um die von der Straße über die Radaufhängungen in das Fahrwerk eingeleiteten Schwingungen weitgehend vom Fahrzeugbau fem zu halten. Hierbei ist das Außenrohr der Luftfeder und eine Kolbenstange des Dämpfungselements mit dem Fahrzeugaufbau und dem Fahrwerk verbunden, wobei die Wirkung der Luftfeder von der Größe und dem herrschenden Druck des Gasraumes, dem Abstand des Außenrohres von dem Abrollrohr sowie von der Form des Abrollprofils auf dem Abrollrohr abhängig ist. Während das Problem, nämlich den Gasraum gegen die Atmosphäre abzudichten, durch die Verwendung einen O-Ringes zwischen dem Abrollrohr der Luftfeder und dem Behälterrohr des Dämpfungselements gelöst ist, wurde bisher eine Konstruktion gewählt, die einen spanend hergestellten Stützring vorsieht, der nur unter hohem fertigungstechnischem Aufwand darstellbar ist und mit dem Behälterrohr verbunden werden muss. Eine Kontur des Abrollrohres kann sich jetzt an dem Stützring abstützen und/oder zentrieren. Je höher aber die Stückzahl wird, desto größer wird der Bedarf nach einer Rationalisierung und prozesssicheren Handhabung der vorgenannten Abstützstelle für das Abrollrohr auf dem Behälterrohr.

Die vorliegende Erfindung schlägt zur Rationalisierung der vorgenannten Abstützstelle des Abrollrohres auf dem Behälterrohr eines Dämpfungselementes einen Stützring vor, der als gestanztes oder geprägtes Stahlblechteil ein Profil aufweist, das im Schnitt etwa einer S-Form entspricht und an seinem Innendurchmesser einen Bund mit einer Anlagefläche aufweist, mit der der Stützring sich auf das Behälterrohr aufpressen lässt. Das Behälterrohr weist an der Stelle, an der der Stützring positioniert sein soll, eine Verjüngung auf, an deren Schräge der Bund anschlägt, wenn der Stützring auf den schlankeren Teil des Behälterrohres aufgeschoben wird. Das Abrollprofil des Abrollrohres hat an der Stelle des Stützringes eine Einschnürung, deren Kontur in etwa parallel zu der des Behälterrohres verläuft und zur Abstützung des Stützringes eine zum schlankeren Teil des Behälterrohres parallel und zylindrisch verlaufenden Abschnitt aufweist.

Der Abstützring weist am äußeren Bereich des Profils Zungen und Aussparungen auf, wobei die Zungen sich bei der Montage des Abrollrohres auf dem Behälterrohr unter Vorspannung in den zylindrischen Bereich der Einschnürung festspannen und das Abrollrohr gemeinsam mit einer Befestigungsstelle an einem Haltering auf dem Behälterrohr fixieren und jede Kippneigung des Abrollrohres im Fahrbetrieb des Schwingungsdämpfers verhindern, die zu Undichtigkeiten an einem O-Ring an der Befestigungsstelle führen kann.

Ausgehend von dem Gasinhalt eines Gasraumes, der als Luftfeder unter ständigem Druck steht und der von einem massefesten Außenrohr, einem Federbalg und vom Abrollrohr gebildet wird, wird das Dämpfungselement beim Ein- und Austauchen einer Kolbenstange und beim Abrollen des Federbalgs komprimierte Luft an dem Stützring vorbei gepresst, weshalb an seinem Umfang Durchbrüche angeordnet sind, die groß genug sind, um dort die Strömungsgeschwindigkeit der Luft und die Geräuschbildung in tolerierbaren Grenzen zu halten.

Die vorliegenden Erfindung hat es sich daher zur Aufgabe gemacht, einen Schwingungsdämpfer, bestehend aus einem Dämpfungselement und einer Luftfeder, zu schaffen, in welchem ein Abrollrohr als Bestandteil der Luftfeder auf kostengünstige und prozesssicheren Weise und mit geringem Montageaufwand gegenüber einem Behälterrohr des Dämpfungselements abgestützt werden kann.

Die Lösung der Aufgabe ist im Kennzeichen des Hauptanspruches beschrieben. Ausgestaltungen sind den Unteransprüchen zu entnehmen.

Anhand mehrerer Zeichnungen wird ein Ausführungsbeispiel einer Abstützung eines Abrollrohres einer Luftfeder gegenüber einem Behälterrohr eines Dämpfungselements erläutert. Es zeigen
- Fig.1: einen Schwingungsdämpfer mit einer Abstützung eines Abrollrohres gegenüber einem Behälterrohr mittels eines Stützrings;
- Fig.2: den Stützring zwischen dem Behälterrohr und dem Abrollrohr als Vergrößerung aus Fig.1;
- Fig.3: den Stützring mit einem Profil, einem Bund sowie mit Zungen und Aussparungen im Teilschnitt.

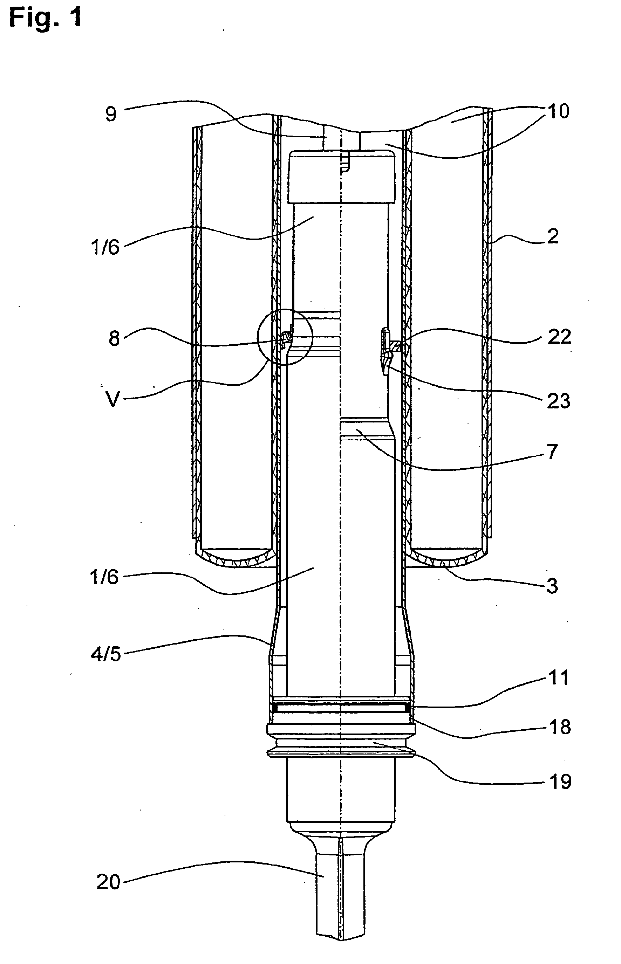

Fig.1 zeigt einen Schwingungsdämpfer bestehend aus einem Dämpfungselement 1 und einer Luftfeder, wobei das Dämpfungselement 1 ein Behälterrohr 6, ein Befestigungsteil 20 und eine Kolbenstange 9 aufweist und die Luftfeder aus einem als Rollbalg wirkenden Federbalg 3, einem unter Druckvorspannung stehenden Gasraum 10, einem mit einer schwingungsarm zu haltenden Masse verbundenen Außenrohr 2 und einem ein Abrollprofil 5 tragenden Abrollrohr 4 besteht. Der Federbalg 3 verbindet als elastisches Element das Außenrohr 2 und das Abrollrohr 4, wobei der Federbalg 3 bei einer axialen Relativbewegung des Außenrohres 2 gegenüber dem Abrollrohr 4 auf dem Abrollprofil 5 des Abrollrohres 4 abrollt und durch die Kompression des Gases die Funktion einer Feder übernimmt. Das Abrollrohr 4 umhüllt in dem vorliegenden Ausführungsbeispiel das Behälterrohr 6 fast vollständig und ist in der Nähe des Befestigungsteils 20 an einer Befestigungsstelle 18 mit einem O-Ring 11 auf einem Haltering 19 gegen das Behälterrohr 6 abgedichtet, so dass der Gasraum 10 das Behälterrohr 2 umschließt. Das Abrollrohr 4 ist zusätzlich durch einen Stützring 8 gegen einen schlankeren Teil des Behälterrohres 6 abgestützt, wobei der Stützring 8 gegen eine Schräge einer Verjüngung 7 am Behälterrohr 6 anschlägt und auf diese Weise innerhalb einer Einschnürung 21 am Abrollrohr 5 positioniert ist.

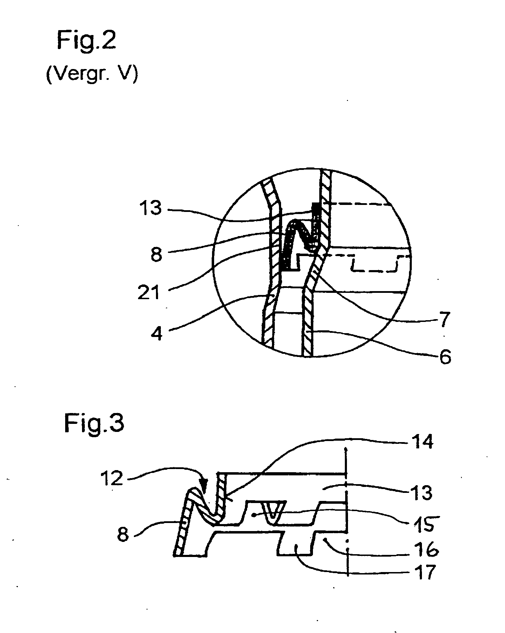

Aus einer Vergrößerung V gemäß Fig.2 geht hervor, wie der Stützring 8 zwischen der Einschnürung 21 und dem schlankeren Teil des Behälterrohres 6 an der Schräge der Verjüngung 7 positioniert ist, wobei ein Bund 13 am Stützring 8 vorzugsweise einen Presssitz auf dem Behälterrohr 6 aufweist.

Fig.3 zeigt eine Anlagefläche 13 am Innendurchmesser des Bundes 13, die mit dem Behälterrohr 6 in Kontakt steht. Außerdem weist der Stützring 8 im Schnitt ein S-förmiges Profil 12 auf, an dessen äußerem Ende Aussparungen 16 am Umfang des Stützrings 8 angeordnet sind, die an ihren Zwischenräumen Zungen 17 ergeben, die sich bei der Montage des Abrollrohres 5 unter Vorspannung an den Innendurchmesser der Einschnürung 21 des Abrollrohres 5 anlegen. Im mittleren Umfangsbereich des Stützrings 8 sind Durchbrüche 15 angeordnet, die die komprimierte Luft im Gasraum 10 durch strömen lassen sollen.

Der Vorteil der Verwendung des Stützrings 8 liegt in seiner kostengünstigen Herstellung und seiner besseren Gestaltungsmöglichkeit durch die Stanz- und Prägetechnik gegenüber dem Stand der Technik, wo Anprägungen am Behälterrohr und ein Stützring erforderlich waren, der mit dem Behälterrohr verbunden war.

### Bezugszeichenliste

- 1: Dämpfungselement
- 2: Außenrohr (massefest)
- 3: Federbalg
- 4: Abrollrohr
- 5: Abrollprofil
- 6: Behälterrohr
- 7: Verjüngung
- 8: Stützring
- 9: Kolbenstange
- 10: Gasraum
- 11: O-Ring
- 12: Profil
- 13: Bund
- 14: Anlagefläche
- 15: Durchbruch
- 16: Aussparung
- 17: Zunge
- 18: Befestigungsstelle
- 19: Haltering
- 20: Befestigungsteil
- 21: Einschnürung
- 22: Ring
- 23: Ausprägung
- V: Vergrößerung

## Patentansprüche

1. Schwingungsdämpfer, bestehend aus einem Dämpfungselement und einer Luftfeder, wobei das Dämpfungselement ein Behälterrohr, ein Befestigungsteil und eine Kolbenstange aufweist und die Luftfeder aus einem als Rollbalg wirkenden Federbalg, einem mit einer schwingungsarm zu haltenden Masse verbundenen Außenrohr und einem ein Abrollprofil tragenden Abrollrohr besteht, wobei der Federbalg einen mit einer unter Druck stehenden Gasfüllung versehenen Federraum begrenzt, während das Abrollrohr den Gasraum gegenüber dem Behälterrohr abdichtet und auf diesem fixiert ist,
**dadurch gekennzeichnet,**
**dass** zwischen dem Abrollrohr (4) und dem Behälterrohr (6) ein Stützring (8) angeordnet ist, der das Abrollrohr (4) auf dem Behälterrohr (6) abstützt und zentriert, wobei am Außenumfang des Stützringes (8) federnde Zungen (17) angeordnet sind.

2. Schwingungsdämpfer nach Anspruch 1,
**dadurch gekennzeichnet,**
**dass** der Stützring (8) einen Bund (13) aufweist, mit dem er auf dem Behälterrohr (6) angeordnet ist.

3. Schwingungsdämpfer nach Anspruch 1 oder 2,
**dadurch gekennzeichnet,**
**dass** die Position des Stützrings (8) auf dem Behälterrohr (6) durch einen Anschlag am Behälterrohr (6) definiert ist.

4. Schwingungsdämpfer nach Anspruche 1,
**dadurch gekennzeichnet,**
**dass** der Stützring (8) durch Schweißen, Versicken, Kleben, Löten, Presssitz oder dergleichen auf dem Behälterrohr (6) fixiert ist.

5. Schwingungsdämpfer nach einem der Ansprüche 1 bis 4,
**dadurch gekennzeichnet,**
**dass** der Anschlag eine Schräge einer Verjüngung (7) am Behälterrohr (6) ist.

6. Schwingungsdämpfer nach einem der Ansprüche 1 bis 5,
**dadurch gekennzeichnet,**
**dass** das Abrollrohr (4) eine Einschnürung (21) aufweist, die im Bereich des Stützrings (8) einen zylindrischen Verlauf hat.

7. Schwingungsdämpfer nach einem der Ansprüche 1 bis 6,
**dadurch gekennzeichnet,**
**dass** der Stützring (8) vorzugsweise ein S-förmiges Profil (12) aufweist, wobei am Außenumfang des Stützrings (8) Aussparungen (16) angeordnet sind.

8. Schwingungsdämpfer nach einem der Ansprüche 1 bis 7,
**dadurch gekennzeichnet,**
**dass** der Stützring (8) Durchbrüche (16) aufweist, deren Größe im Betrieb des Schwingungsdämpfers einen ausreichend großen Gastransport ohne nennenswerte Geräuschentwicklung und/oder Drosselung zulässt.

## Claims

1. Vibration damper, comprising a damping element and an air spring, the damping element having a container tube, a fastening part and a piston rod, and the air spring comprising a spring bellows which acts as a rolling bellows, an outer tube which is connected to a mass which is to be held in a low-vibration manner, and a rolling tube which bears a rolling profile, the spring bellows delimiting a spring space which is provided with a pressurized gas filling, while the rolling tube seals off the gas space with respect to the container tube and is fixed on the latter, **characterized in that** a supporting ring (8) is arranged between the rolling tube (4) and the container tube (6), which supporting ring (8) supports and centres the rolling tube (4) on the container tube (6), sprung tongues (17) being arranged on the outer circumference of the supporting ring (8).

2. Vibration damper according to Claim 1, **characterized in that** the supporting ring (8) has a collar (13), with which it is arranged on the container tube (6).

3. Vibration damper according to Claim 1 or 2, **characterized in that** the position of the supporting ring (8) on the container tube (6) is defined by a stop on the container tube (6).

4. Vibration damper according to Claim 1, **characterized in that** the supporting ring (8) is fixed on the container tube (6) by welding, lock-beading, adhesive bonding, soldering, press fitting or the like.

5. Vibration damper according to one of Claims 1 to 4, **characterized in that** the stop is an inclined slope of a tapered section (7) on the container tube (6).

6. Vibration damper according to one of Claims 1 to 5, **characterized in that** the rolling tube (4) has a constriction (21) which has a cylindrical profile in the region of the supporting ring (8).

7. Vibration damper according to one of Claims 1 to 6, **characterized in that** the supporting ring (8) preferably has an S-shaped profile (12), cut-outs (16) being arranged on the outer circumference of the supporting ring (8).

8. Vibration damper according to one of Claims 1 to 7, **characterized in that** the supporting ring (8) has apertures (16), the size of which permits a sufficiently large amount of gas to be transported during operation of the vibration damper without significant noise development and/or throttling action.

## Revendications

1. Amortisseur de vibrations, constitué d'un élément d'amortissement et d'un ressort pneumatique, sachant que l'élément d'amortissement présente un réceptacle tubulaire, une partie de fixation et une tige de piston, et que le ressort pneumatique est constitué d'un soufflet de ressort jouant le rôle de soufflet roulant, d'un tube extérieur relié à une masse à maintenir peu vibrante et d'un tube de déroulement portant un profil de déroulement, le soufflet de ressort délimitant une chambre de ressort pourvue d'un remplissage de gaz sous pression, tandis que le tube de déroulement assure l'étanchement de la chambre de gaz vis-à-vis du réceptacle tubulaire et est fixé sur ce dernier, **caractérisé en ce qu'**une bague de soutien (8) est disposée entre le tube de déroulement (4) et le réceptacle tubulaire (6), bague qui soutient et centre le tube de déroulement (4) sur le réceptacle tubulaire (6), des languettes élastiques (17) étant disposées sur la circonférence extérieure de la bague de soutien (8).

2. Amortisseur de vibrations selon la revendication 1, **caractérisé en ce que** la bague de soutien (8) présente un collet (13) par lequel elle est disposée sur le réceptacle tubulaire (6).

3. Amortisseur de vibrations selon la revendication 1 ou 2, **caractérisé en ce que** la position de la bague de soutien (8) sur le réceptacle tubulaire (6) est définie par une butée sur le réceptacle tubulaire (6).

4. Amortisseur de vibrations selon la revendication 1, **caractérisé en ce que** la bague de soutien (8) est fixée sur le réceptacle tubulaire (6) par soudage, sertissage, collage, brasage, ajustement serré ou analogue.

5. Amortisseur de vibrations selon l'une quelconque des revendications 1 à 4, **caractérisé en ce que** la butée est un biais d'un rétrécissement (7) sur le réceptacle tubulaire (6).

6. Amortisseur de vibrations selon l'une quelconque des revendications 1 à 5, **caractérisé en ce que** le tube de déroulement (4) présente un resserrement (21) qui possède une allure cylindrique dans la région de la bague de soutien (8).

7. Amortisseur de vibrations selon l'une quelconque des revendications 1 à 6, **caractérisé en ce que** la bague de soutien (8) présente de préférence un profil (12) en forme de S, des évidements (16) étant disposés sur la circonférence extérieure de la bague de soutien (8).

8. Amortisseur de vibrations selon l'une quelconque des revendications 1 à 7, **caractérisé en ce que** la bague de soutien (8) présente des brèches (16) dont la taille autorise, pendant le fonctionnement de l'amortisseur de vibrations, un transport de gaz suffisamment important sans production notable de bruit et/ou sans étranglement.
